# EUROPÄISCHE PATENTANMELDUNG

(11) **EP 2 677 181 A2**
(43) Veröffentlichungstag der Anmeldung: **25.12.2013**
(21) Anmeldenummer: 13171454.5
(22) Anmeldetag: 11.06.2013
(51) Int. Cl.: F16B 37/12

(54) **Lagerring, Gewindehülse und Verfahren zum Fixieren einer Gewindehülse in einer Bohrung in einem Lagerring**

(30) Priorität: 18.06.2012 DE 102012210235
(71) Anmelder: Aktiebolaget SKF, 41550 Göteborg (SE)
(72) Erfinder: von Schleinitz, Thilo, 97422 Schweinfurt (DE)
(74) Vertreter: Schonecke, Mitja

(57) **Zusammenfassung**

Die Erfindung betrifft einen Lagerring (1) mit wenigstens einer Bohrung (2). In der Bohrung (2) ist eine als ein separates Bauteil ausgebildete Gewindehülse (3) angeordnet. Die Gewindehülse (3) weist ein erstes axiales Ende (8) und ein zweites axiales Ende (10) auf. Im Bereich zwischen dem ersten axialen Ende (8) und dem zweiten axialen Ende (10) weist die Gewindehülse (3) ein Innengewinde (7) auf. Im Bereich des ersten axialen Endes (8) weist die Gewindehülse (3) einen Fixierstoffbehälter (9) mit einem Innenraum (15) zur temporären Bevorratung eines Fixierstoffs (12) auf. Die Gewindehülse (3) ist mittels des Fixierstoffs (12) in der Bohrung (2) im Lagerring (1) fixiert.

## Beschreibung

Die Erfindung betrifft einen Lagerring eines Wälz- oder Gleitlagers und ein als ein Wälz- oder Gleitlager ausgebildetes Lager mit einem derartigen Lagerring, insbesondere ein Lager einer Windkraftanlage. Weiterhin betrifft die Erfindung eine Gewindehülse und ein Verfahren zum Fixieren einer Gewindehülse in einer Bohrung in einem Lagerring.

Lagerringe sind in vielfältigen Ausführungsformen bekannt und kommen beispielsweise in Lagern zur drehbaren Lagerung von Maschinenteilen zum Einsatz. Insbesondere bei Lagerringen mit großen Abmessungen kann vorgesehen sein, dass Schraubverbindungen direkt mit dem Lagerring ausgebildet werden und der Lagerring zu diesem Zweck eine oder mehrere Gewindebohrungen aufweist. Ein typisches Einsatzgebiet von Lagern mit vielen Schraubverbindungen sind Windkraftanlagen. Dort kommen beispielsweise Lager zum Einsatz, die jeweils mehr als 200 Schraubverbindungen aufweisen. Mit den Schraubverbindungen können beispielsweise Dichtungsträger, Sensoren, Leitungen von Schmiersystemen oder Kühlsystemen oder sonstige Peripheriekomponenten am Lagerring befestigt sein. Außerdem können mittels Schraubverbindungen das Lager für Transport und Montage zusammengehalten werden, Ösen für das Anbringen von Hebewerkzeugen fixiert werden, eine Vormontage von Anschlussbauteilen durchgeführt werden usw.

Insbesondere bei großen Lagerringen in Kombination mit kleinen Gewindedurchmessern ist die Ausbildung von Schraubverbindungen mittels Gewindebohrungen im Lagerring angesichts der großen Materialdicke des Lagerrings in vielen Fällen die einzige praktikable Lösung. Außerdem ist ein Überstand über die Oberfläche des Lagerrings, der sich bei einer Verwendung einer Schraubenmutter anstelle einer Gewindebohrung zwangsläufig ergibt, mitunter nicht möglich. In vielen Fällen scheitert die Verwendung von Schraubenmuttern auch daran, dass bei der Montage nur eine Seite des Lagerrings zugänglich ist. Ein weiterer Fall, bei dem eine Gewindebohrung nicht lediglich durch eine Schraubenmutter ersetzt werden kann, ist der Verschluss eines Schmierkanals durch einen Schraubverschluss. Außerdem haben Gewindebohrungen im Lagerring den Vorteil, dass bei der Ausbildung der Schraubverbindung die Handhabung von Schraubenmuttern entfällt und die Ausbildung der Schraubverbindung daher für den Anwender mit einem geringen Aufwand durchgeführt werden kann.

Allerdings ist die Herstellung einer Gewindebohrung in einem Lagerring, die in der Regel erst nach dem Härten des Lagerrings durchgeführt wird, mit einem vergleichsweise hohen Aufwand verbunden und es besteht beispielsweise das Risiko, dass das Gewindeschneidwerkzeug oder der Gewindebohrer abbricht und im Lagerring stecken bleibt. In einem solchen Fall kann der Gewindebohrer häufig nur mit großem Zeitaufwand wieder entfernt werden. Insbesondere bei großen Lagerringen mit einer Vielzahl von Gewindebohrungen stellt die Ausbildung der Gewindebohrungen einen nennenswerten Zeit- und Kostenfaktor bei der Herstellung des Lagerrings dar.

Der Erfindung liegt die Aufgabe zugrunde, die Ausbildung einer Schraubverbindung mit einem Lagerring mit einem möglichst geringen Aufwand zu ermöglichen.

Diese Aufgabe wird durch die Merkmalskombinationen der nebengeordneten Ansprüche gelöst.

Der erfindungsgemäße Lagerring weist wenigstens eine Bohrung auf. In der Bohrung ist eine als ein separates Bauteil ausgebildete Gewindehülse angeordnet. Die Gewindehülse weist ein erstes axiales Ende und ein zweites axiales Ende auf. Im Bereich zwischen dem ersten axialen Ende und dem zweiten axialen Ende weist die Gewindehülse ein Innengewinde auf. Im Bereich des ersten axialen Endes weist die Gewindehülse einen Fixierstoffbehälter mit einem Innenraum zur temporären Bevorratung eines Fixierstoffs auf. Die Gewindehülse ist mittels des Fixierstoffs in der Bohrung im Lagerring fixiert.

Die Erfindung hat den Vorteil, dass sie mit einem vergleichsweise geringen Aufwand die Ausbildung einer Schraubverbindung mit einem Lagerring ermöglicht. Im Vergleich zum Ausbilden einer Gewindebohrung direkt im Lagerring entfällt das zeitaufwändige und riskante Einschneiden des Gewindes. Ein weiterer Vorteil besteht darin, dass eine zylindrische Bohrung niedrigere Kerbspannungen als eine Gewindebohrung hervorruft. Außerdem ist es von Vorteil, dass die Bohrung in vergleichsweise geringer Qualität ausgeführt sein kann und insbesondere nicht glatt und nicht präzise maßhaltig sein muss. Das ermöglicht eine sehr schnelle und damit kostengünstige Herstellung der Bohrung und hat im Falle einer nicht glatten Bohrung sogar Vorteile im Hinblick auf die Haftung des Fixierstoffs. Schließlich ist es von Vorteil, dass die Gewindehülse den für ihre Fixierung in der Bohrung erforderlichen Fixierstoff bereits enthält und somit eine externe Dosierung nicht erforderlich ist. Das vereinfacht den Montageprozess und gewährleistet eine hohe Prozesssicherheit insbesondere im Hinblick auf eine positionsgenaue und mengenmäßig abgestimmte Dosierung.

Der Lagerring kann eine Wälzkörperlaufbahn oder eine Gleitfläche aufweisen. Außerdem kann der Lagerring aus einem Stahlwerkstoff gefertigt sein. Dabei kann der Lagerring wenigstens bereichsweise gehärtet sein.

Die Bohrung kann als eine Sacklochbohrung ausgebildet sein, die im Lagerring blind endet. Dies ermöglicht es, die Bohrarbeit auf ein zur Erzielung der geforderten Ausreißkraft der Gewindehülse benötigtes Minimum zu beschränken.

Die Abmessungen der Gewindehülse können so auf die Abmessungen der Bohrung abgestimmt sein, dass die Gewindehülse bündig mit der Oberfläche des Lagerrings abschließt oder gegenüber der Oberfläche in die Bohrung hinein zurück versetzt ist.

Die Gewindehülse kann stoffschlüssig und/oder formschlüssig in der Bohrung im Lagerring fixiert sein. Bei dem Fixierstoff kann es sich um einen Klebstoff, insbesondere um einen metallkontakthärtenden Klebstoff handeln. Dies hat den Vorteil einer guten Lagerfähigkeit der Gewindehülse vor der Montage im Lagerring, wenn der Innenraum des Fixierstoffbehälters nichtmetallisch ausgebildet wird. Beispielsweise eignet sich ein Klebstoff auf Epoxydharzbasis oder auf Polyurethanbasis, insbesondere Urethanmetacrylat. Besonders vorteilhaft sind Klebstoffe, die von Lager-Schmiermitteln, insbesondere von Ölen und Fetten, nicht zersetzt oder auf andere Weise geschädigt werden.

Der Fixierstoffbehälter kann eine Freisetzvorrichtung aufweisen, welche beim Einsetzen der Gewindehülse in die Bohrung im Lagerring Fixierstoff freisetzt. Durch die Freisetzvorrichtung lässt sich eine automatisierte Freisetzung einer definierten Fixierstoffmenge bei der Montage der Gewindehülse erzielen.

Die Freisetzvorrichtung kann beispielsweise als ein Kolben ausgebildet sein, der in einer Öffnung des Fixierstoffbehälters angeordnet ist. Eine derartige Ausgestaltung lässt sich mit wenig Aufwand als Kunststoffspritzteil realisieren und arbeitet sehr zuverlässig. Der Fixierstoffbehälter kann bereichsweise einen lichten Querschnitt aufweisen, der größer ist als der lichte Querschnitt des Kolbens. Auf diese Weise kann ein Klemmen des Kolbens verhindert werden.

Der Kolben kann eine Durchgangsbohrung aufweisen, die in den Innenraum des Fixierstoffbehälters mündet. Die Durchgangsbohrung kann als Entlüftungskanal beim Befüllen des Innenraums des Fixierstoffbehälters mit Fixierstoff dienen. Die Durchgangsbohrung kann verschlossen sein. Insbesondere kann die Durchgangsbohrung zugeschmolzen sein.

Der Kolben kann im Bereich seiner Mantelfläche wenigstens eine Vertiefung aufweisen, die zur Bohrung im Lagerring hin offen ist und über die bei Betätigung des Kolbens Fixierstoff aus dem Innenraum des Fixierstoffbehälters freisetzbar ist. Über die Vertiefung kann bei der Montage der Gewindehülse in der Bohrung des Lagerrings die Freisetzung des Fixierstoffs erfolgen. Die Vertiefung kann sich lediglich über einen Teilbereich der axialen Länge des Kolbens erstrecken. Insbesondere kann die Vertiefung zu einer axialen Endfläche des Kolbens, die dem Innenraum zugewandt ist, beabstandet ausgebildet sein. Dadurch kann eine zuverlässige Abdichtung des Innenraums des Fixierstoffbehälters vor der Montage der Gewindehülse in der Bohrung des Lagerrings gewährleistet werden.

Der Fixierstoffbehälter kann wenigstens teilweise innerhalb der Gewindehülse angeordnet sein. Dies hat den Vorteil, dass eine große Oberfläche der Gewindehülse für die Fixierung in der Bohrung im Lagerring verfügbar ist und somit eine belastbare Fixierung möglich ist bzw. nicht unnötig tief gebohrt werden muss..

Der Fixierstoffbehälter kann einen Flansch aufweisen, der axial an die Gewindehülse anschlägt. Dadurch kann verhindert werden, dass der Fixierstoffbehälter vor oder während der Montage der Gewindehülse in der Bohrung des Lagerrings zu tief in die Gewindehülse hinein geschoben wird.

Der Fixierstoffbehälter kann aus Kunststoff gefertigt sein. Insbesondere kann der Fixierstoffbehälter als ein Spritzgussteil ausgebildet sein. Dies ermöglicht eine kostengünstige Herstellung und eine weite Formenvielfalt.

Die Gewindehülse kann aus Metall gefertigt sein. Insbesondere kann die Gewindehülse aus einem Stahlwerkstoff gefertigt sein. Außerdem kann die Gewindehülse mit einer Korrosionsschutzbeschichtung, z, B. einer Verzinkung, versehen sein.

Die Gewindehülse kann auf ihrer Außenseite wenigstens bereichsweise eine strukturierte Oberfläche aufweisen. Die Struktur kann als eine Mikrorauhigkeit ausgebildet sein. Dadurch lässt sich eine verbesserte Anhaftung des Fixierstoffs erzielen. Somit lässt sich im Rahmen der Erfindung eine Bohrung geringer Qualität vorteilhaft einsetzen. Ebenso ist es möglich, makroskopisch strukturierte Oberflächen mit einem Oberflächenprofil vorzusehen, in das der Fixierstoff formschlüssig eingreift. Dadurch lässt sich eine sehr belastbare Fixierung der Gewindehülse in der Bohrung des Lagerrings erreichen. Beispielsweise kann die Außenseite der Gewindehülse eine Riffelung oder eine Rändelung aufweisen.

Die Erfindung bezieht sich weiterhin auf ein Lager mit dem erfindungsgemäßen Lagerring. Das Lager kann zur drehbaren Lagerung eines Maschinenteils ausgebildet sein. Weiterhin kann das Lager als ein Wälzlager oder als ein Gleitlager ausgebildet sein. Insbesondere kann das Lager als ein Lager einer Windkraftanlage ausgebildet sein.

Außerdem bezieht sich die Erfindung auf eine Gewindehülse mit einem Innengewinde, das zwischen einem ersten axialen Ende und einem zweiten axialen Ende ausgebildet ist. Die Gewindehülse weist einen Fixierstoffbehälter mit einem Innenraum auf, der einen Fixierstoff zum Fixieren der Gewindehülse in einer Bohrung enthält. Weiterhin weist die Gewindehülse eine Freisetzvorrichtung zum Freisetzen von Fixierstoff auf. Die Freisetzvorrichtung ist als ein Kolben ausgebildet, der in einer Öffnung des Fixierstoffbehälters angeordnet ist. Der Kolben weist eine Durchgangsbohrung auf, die in den Innenraum des Fixierstoffbehälters mündet. Alternativ oder zusätzlich zur Durchgangsbohrung weist der Kolben im Bereich seiner Mantelfläche wenigstens eine Vertiefung auf, über die bei Betätigung des Kolbens Fixierstoff aus dem Innenraum des Fixierstoffbehälters freisetzbar ist.

Die Gewindehülse kann eine hohlzylindrisch ausgebildete Seitenwand aufweisen. Der Fixierstoff kann flüssig oder pastös sein. Der Fixierstoffbehälter kann im Bereich eines ersten axialen Endes der Gewindehülse angeordnet sein. Insbesondere kann die Gewindehülse durch den Fixierstoffbehälter flüssigkeitsdicht verschlossen sein. Dies hat den Vorteil, dass ein Eindringen des Fixierstoffs in die Gewindehülse und eine Beeinträchtigung des Innengewindes durch den Fixierstoff verhindert werden.

Im Bereich eines zweiten axialen Endes kann die Gewindehülse offen ausgebildet sein. Das Innengewinde kann sich ausgehend vom zweiten axialen Ende lediglich über einen axialen Teilbereich der Gewindehülse erstrecken und somit in einem axialen Abstand zum ersten axialen Ende angeordnet sein. In diesem Abstandsbereich kann der Fixierstoffbehälter angeordnet sein.

Die Erfindung bezieht sich zudem auf ein Verfahren zum Fixieren einer Gewindehülse in einer Bohrung in einem Lagerring. Beim erfindungsgemäßen Verfahren werden ein Fixierstoffbehälter, der in seinem Innenraum einen Fixierstoff enthält und die Gewindehülse in die Bohrung eingeführt und beim oder nach dem Einführen der Gewindehülse in die Bohrung wenigstens ein Teil des Fixierstoffs aus dem Innenraum des Fixierstoffbehälters freigesetzt.

Die Freisetzung des Fixierstoffs kann durch ein Anschlagen des Fixierstoffbehälters an einem Bodenbereich der Bohrung ausgelöst werden. Dadurch lässt sich auf einfache Weise eine mit dem Prozessablauf koordinierte Freisetzung erreichen. Insbesondere kann die Freisetzung des Fixierstoffs durch ein Verschieben eines Kolbens in einen Innenraum des Fixierstoffbehälters erfolgen.

Der Fixierstoff kann in die Bohrung im Lagerring freigesetzt werden. Insbesondere kann der Fixierstoff in einen Spalt zwischen der Gewindehülse und der Bohrung im Lagerring gepresst werden.

Der Fixierstoffbehälter kann als ein Bestandteil der Gewindehülse ausgebildet sein. Der Fixierstoffbehälter kann so eingerichtet sein, dass eine vorgegebene Menge Fixierstoff freigesetzt wird. Insbesondere können die einzelnen Komponenten so aufeinander abgestimmt sein, dass sich der Fixierstoffbehälter durch bündiges Eindrücken der Gewindehülse in die Bohrung von selbst entleert und die freigesetzte Mende Fixierstoff den Spalt zwischen der Bohrung und der Gewindehülse nahezu vollständig ausfüllt.

Die Erfindung wird nachstehend anhand des in der Zeichnung dargestellten Ausführungsbeispiels erläutert.

Es zeigen:
- Figur 1: ein Ausführungsbeispiel eines erfindungsgemäß ausgebildeten Lagerrings in Seitenansicht,
- Figur 2: das in Figur 1 dargestellte Ausführungsbeispiel des Lagerrings in Schnittdarstellung,
- Figur 3: ein Ausführungsbeispiel der Gewindehülse vor dem Einsetzen in die Bohrung in Schnittdarstellung,
- Figur 4: ein Ausführungsbeispiel des Fixierstoffbehälters der in Figur 3 dargestellten Gewindehülse in Schnittdarstellung,
- Figur 5: das in Fig. 4 dargestellte Ausführungsbeispiel des Fixierstoffbehälters in Aufsicht,
- Figur 6: eine Momentaufnahme während des Einführens der Gewindehülse in die Bohrung im Lagerring in Schnittdarstellung.

Bei den Figuren handelt es sich jeweils um schematische Darstellungen, die aus Gründen der besseren Erkennbarkeit einzelner Komponenten in der Regel nicht maßstäblich gezeichnet sind.

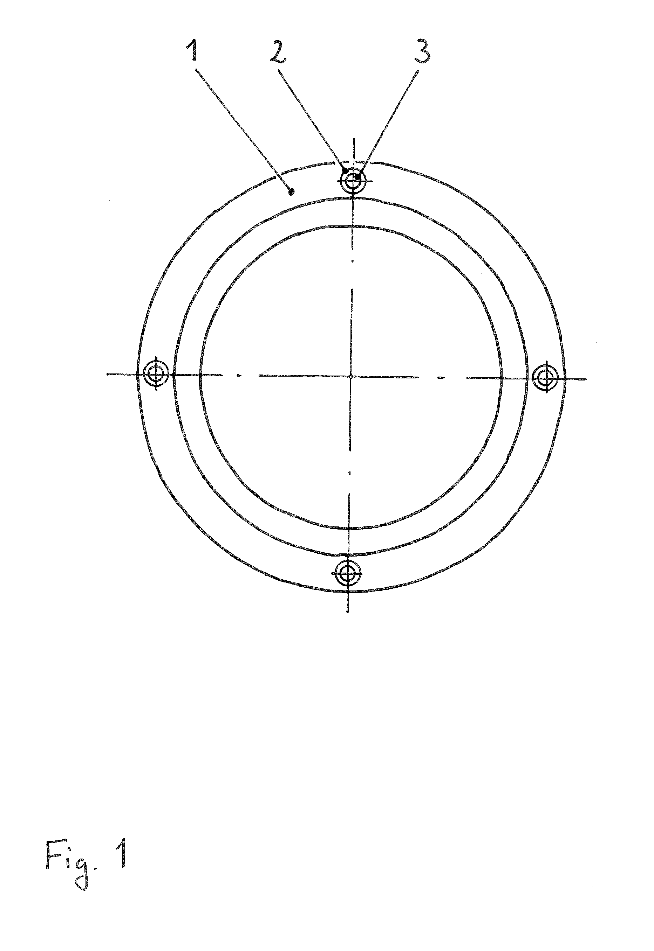

Figur 1 zeigt ein Ausführungsbeispiel eines erfindungsgemäß ausgebildeten Lagerrings 1 in Seitenansicht. Der Lagerring 1 kann als ein Bestandteil eines Wälzlagers oder eines Gleitlagers ausgebildet sein und demgemäß eine Wälzkörperlaufbahn oder Gleitfläche aufweisen. Beim dargestellten Ausführungsbeispiel ist der Lagerring 1 als ein Außenring eines Kegelrollenlagers ausgebildet. Der Lagerring 1 kann beispielsweise aus einem Stahlwerkstoff hergestellt und ganz oder teilweise gehärtet sein. Insbesondere kann es sich bei dem Lagerring 1 um einen Innenring oder einen Außenring handeln. Ebenso ist es aber auch möglich, dass es sich bei dem Lagerring 1 um einen von mehreren axial nebeneinander angeordneten Ringen eines Lagers handelt. Das Lager kann der drehbaren Lagerung eines Maschinenteils dienen. Insbesondere kann das Lager als ein Großlager, beispielsweise als ein Lager einer Windenergieanlage, ausgebildet sein.

Der Lagerring 1 weist mehrere Bohrungen 2 auf, in denen jeweils eine Gewindehülse 3 angeordnet ist. Der Lagerring 1 kann auch eine deutlich höhere Zahl an Bohrungen 2 mit Gewindehülsen 3 aufweisen als in Figur 1 dargestellt. Ebenso ist es auch möglich, dass der Lagerring 1 lediglich eine einzige Bohrung 2 mit einer Gewindehülse 3 aufweist. Weiterhin können die Gewindehülsen 3 in Bohrungen 2 angeordnet sein, die abweichend von der Darstellung der Figur 1 nicht im Bereich einer Stirnfläche, sondern im Bereich einer Mantelfläche oder einer sonstigen Fläche des Lagerrings 1 ausgebildet sind. Außerdem kann der Lagerring 1 auch Bohrungen aufweisen, in denen keine Gewindehülsen 3 angeordnet sind.

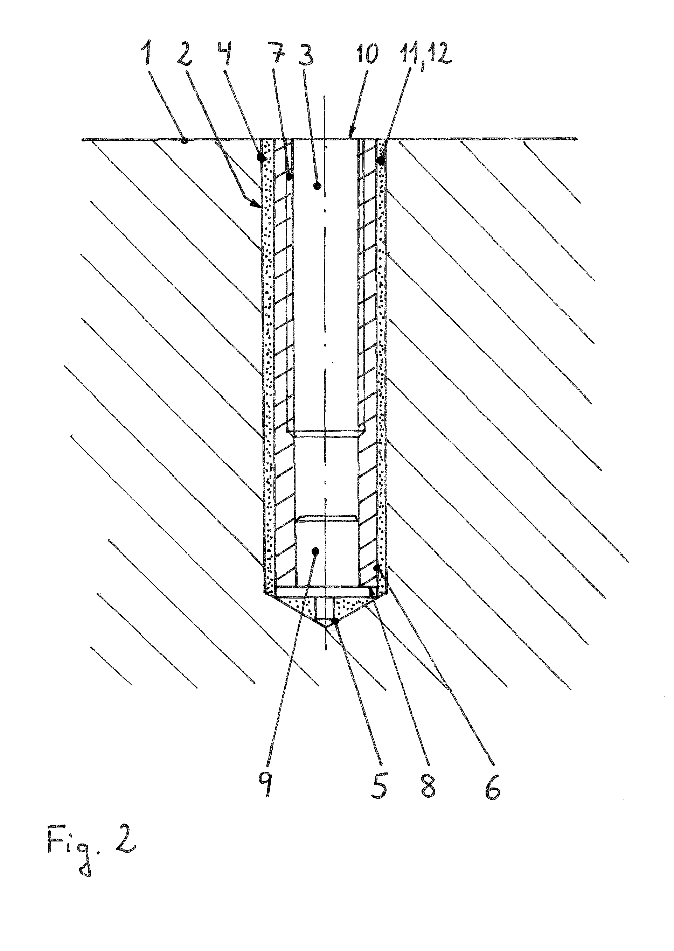

Figur 2 zeigt das in Figur 1 dargestellte Ausführungsbeispiel des Lagerrings 1 in Schnittdarstellung. Der Schnitt verläuft mittig durch eine der Bohrungen 2 und die darin befindliche Gewindehülse 3. Dabei ist die Darstellung auf den Bereich der Bohrung 2 und deren unmittelbare Umgebung begrenzt.

Beim dargestellten Ausführungsbeispiel ist die Bohrung 2 als eine Sacklochbohrung ausgebildet und weist einen zylindrisch geformten Wandbereich 4 und einen kegelig geformten Bodenbereich 5 auf. Typischer Weise beträgt der Kegelwinkel zwischen 118° und 135°. Die Gewindehülse 3 weist eine hohlzylindrische Seitenwand 6 auf, auf deren Innenseite ein Innengewinde 7 ausgebildet ist und deren Außenseite eine Riffelung, Rändelung oder sonstige Struktur aufweisen kann oder auch als eine glatte Fläche ausgebildet sein kann. Im Bereich eines ersten axialen Endes 8 ist die Gewindehülse 3 durch einen Fixierstoffbehälter 9 flüssigkeitsdicht verschlossen. Im Bereich eines zweiten axialen Endes 10 ist die Gewindehülse 3 offen ausgebildet und kann eine nicht figürlich dargestellte Schraube aufnehmen. Das Innengewinde 7 erstreckt sich ausgehend vom zweiten axialen Ende 10 lediglich über einen axialen Teilbereich der Gewindehülse 3 und ist somit in einem axialen Abstand zum ersten axialen Ende 8 angeordnet. Abweichend vom dargestellten Ausführungsbeispiel kann sich das Innengewinde 7 auch über die gesamte axiale Länge der Gewindehülse 3 erstrecken.

Die Gewindehülse 3 ist so in der Bohrung 2 im Lagerring 1 angeordnet, dass der Fixierstoffbehälter 9 der Gewindehülse 3 und somit das erste axiale Ende 8 zum Bodenbereich 5 der Bohrung 2 benachbart ist. Im Bereich des zweiten axialen Endes 10 schließt die Seitenwand 6 der Gewindehülse 3 bündig mit der Oberfläche des Lagerrings 1 ab. Die Gewindehülse 3 ist in der Bohrung 2 zentriert angeordnet, wobei die Seitenwand 6 der Gewindehülse 3 in einem geringen Abstand zum Wandbereich 4 der Bohrung 2 angeordnet ist. Das bedeutet, dass zwischen der Seitenwand 6 der Gewindehülse 3 und dem Wandbereich 4 der Bohrung 2 ein Spalt 11 ausgebildet ist. Der Spalt 11 kann sich auch in die Region zwischen dem Fixierstoffbehälter 9 der Gewindehülse 3 und dem Bodenbereich 5 der Bohrung 2 erstrecken. Idealerweise weist der Spalt 11 im gesamten Bereich der Seitenwand 6 der Gewindehülse 3 annähernd eine gleiche Breite auf. Typischerweise weist die Bohrung 2 einen Durchmesser auf, der 0,2 mm größer ist als der Außendurchmesser der Gewindehülse 3. Es sind aber auch andere Werte möglich, wobei der Durchmesser der Bohrung 2 vorzugsweise zwischen 0,1 mm und 1 mm, insbesondere zwischen 0,1 mm und 0,5 mm, größer als der Außendurchmesser der Gewindehülse 3 ist.

Der Spalt 11 ist wenigstens teilweise mit einem Fixierstoff 12 gefüllt. Durch den Fixierstoff 12 wird eine stoffschlüssige Verbindung zwischen der Gewindehülse 3 und dem Lagerring 1 ausgebildet. Bei dem Fixierstoff 12 kann es sich beispielsweise um einen Klebstoff, insbesondere um einen metallkontakthärtenden Klebstoff handeln. Metallkontakthärtenden Klebstoffe zeichnen sich dadurch aus, dass sie bei Metallkontakt erhärten. Ebenso kann beispielsweise ein thermisch härtender Klebstoff zum Einsatz kommen, der in einem vorgegebenen Temperaturbereich erhärtet. Beispielsweise eignet sich ein Klebstoff auf Epoxydharzbasis oder auf Polyurethanbasis, insbesondere Urethanmetacrylat. Alternativ oder zusätzlich zur stoffschlüssigen Verbindung kann durch den Fixierstoff 12 eine formschlüssige Verbindung ausgebildet werden, wenn die äußere Mantelfläche der Gewindehülse 3 und der Wandbereich 4 der Bohrung 2 jeweils eine dafür geeignete Geometrie aufweisen. Dies ist beispielsweise dann der Fall, wenn diese Flächen eine Topographie wie z. B. eine Riffelung oder eine Rändelung aufweisen, die einen formschlüssigen Eingriff des Fixierstoffs 12 ermöglichen. Die Topographie kann so ausgebildet sein, dass der Formschluss in axialer Richtung und/oder in Umfangsrichtung der Gewindehülse 3 wirksam ist.

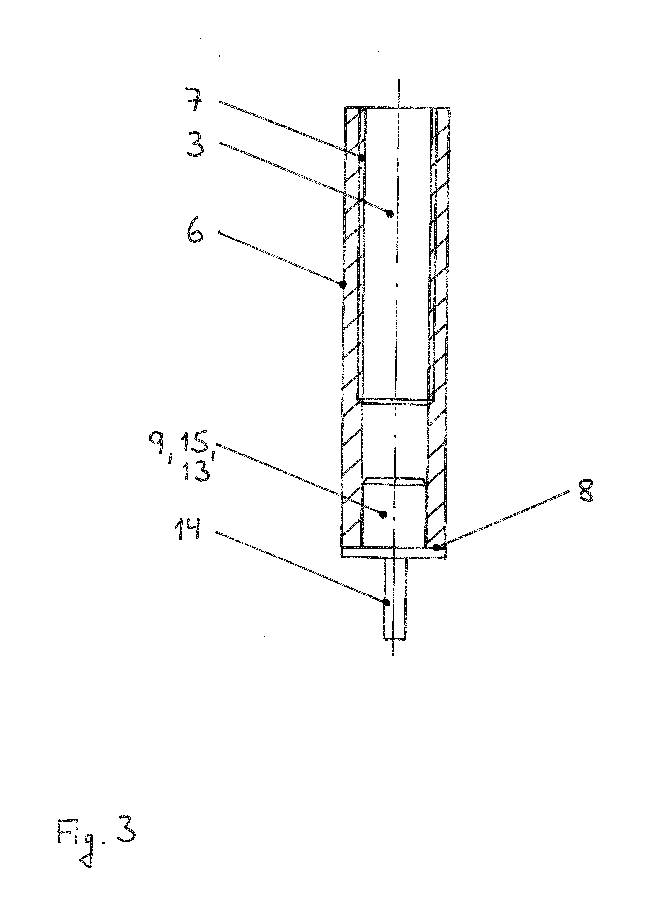

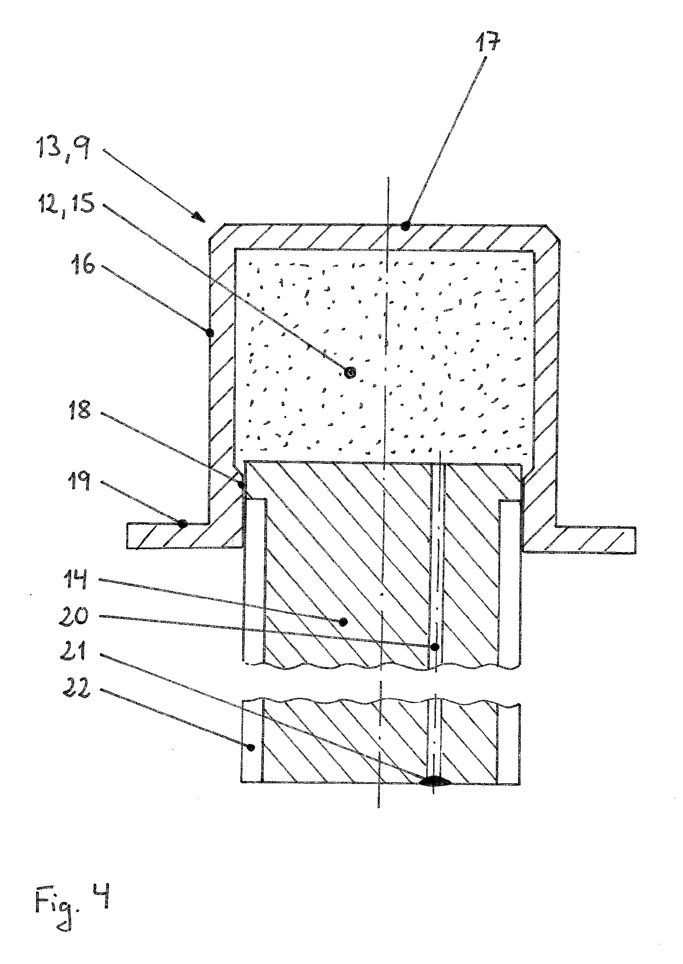

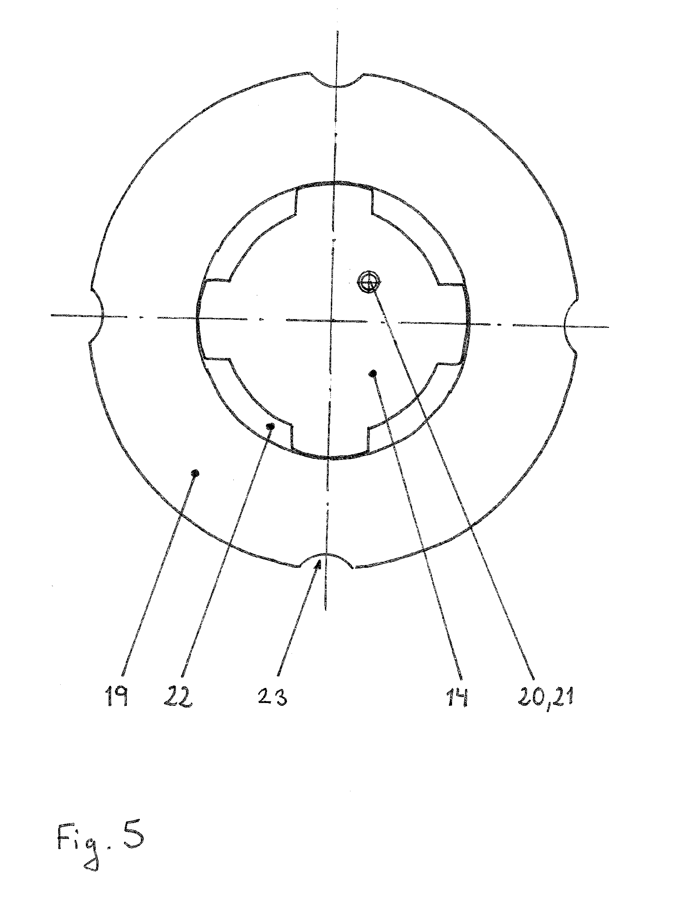

Figur 3 zeigt ein Ausführungsbeispiel der Gewindehülse 3 vor dem Einsetzen in die Bohrung 2 in Schnittdarstellung. Figur 4 zeigt ein Ausführungsbeispiel des Fixierstoffbehälters 9 der in Figur 3 dargestellten Gewindehülse 3 in Schnittdarstellung. Eine zu Figur 4 gehörige Aufsicht ist in Figur 5 dargestellt.

Der Fixierstoffbehälter 9 ist im Bereich des ersten axialen Endes 8 der Gewindehülse 3 in die Gewindehülse 3 eingepresst, so dass die Gewindehülse 3 in diesem Bereich flüssigkeitsdicht verschlossen ist. Der Fixierstoffbehälter 9 weist einen topfförmig ausgebildeten Hohlkörper 13 und einen axial beweglichen Kolben 14 oder eine andere Freisetzeinrichtung auf. Durch den Hohlkörper 13 und Kolben 14 wird ein Innenraum 15 definiert. Der Hohlkörper 13 weist eine zylinderförmige Seitenwand 16 und einen als eine Kreisscheibe ausgebildeten Boden 17 auf, welcher den Hohlkörper 13 axial einseitig verschließt. Auf seiner anderen Axialseite weist der Hohlkörper 13 eine kreisförmige Öffnung 18 auf, die durch den Kolben 14 verschlossen ist. Im Axialbereich der Öffnung 18 weist der Hohlkörper 13 einen reduzierten Innendurchmesser auf. Außerdem weist der Hohlkörper 13 im Axialbereich der Öffnung 18 einen radial auswärts gerichteten, kreisringförmigen Flansch 19 auf. Im Bereich der Seitenwand 16 wird der Hohlkörper 13 von der Gewindehülse 3 aufgenommen. Mit dem Flansch 19 schlägt der Hohlkörper 13 im Bereich des ersten axialen Endes 8 der Gewindehülse 3 axial an der Gewindehülse 3 an. Der Innenraum 15 des Hohlkörpers 13 ist mit dem Fixierstoff 12 in flüssiger oder pastöser Form gefüllt.

Der Kolben 14 ist zylinderförmig ausgebildet und weist eine axiale Durchgangsbohrung 20 auf, die sich vom Innenraum 15 zur Umgebung erstreckt und an ihrer Umgebungsseite durch einen Verschluss 21 flüssigkeitsdicht verschlossen ist. Im Bereich seiner Mantelfläche weist der Kolben 14 mehrere als axiale Nuten ausgebildete Vertiefungen 22 auf, die sich ausgehend von der Umgebungsseite über einen Teilbereich der axialen Länge des Kolbens 14 erstrecken und demgemäß in einem Abstand zum Innenraum 15 des Hohlkörpers 13 enden. Der Hohlkörper 13 und der Kolben 14 können als Kunststoffteile gefertigt und insbesondere im Spritzgussverfahren hergestellt sein. Die Kunststoff kann so ausgewählt werden, dass die Kunststoffteile chemisch und/oder thermisch beständig sind.

Im Bereich seines Außenumfangs weist der Flansch 19 mehrere Vertiefungen 23 auf.

Zur Befüllung des Fixierstoffbehälters 9 mit dem Fixierstoff 12 wird der Kolben 14 aus der Öffnung 18 des Hohlkörpers 13 entfernt oder die Befüllung wird vor dem Einsetzen des Kolbens 14 in die Öffnung 18 des Hohlkörpers 13 durchgeführt. Der Hohlkörper 13 wird so ausgerichtet, dass seine Öffnung 18 bezogen auf die Schwerkraftrichtung vertikal nach oben zeigt. Dann wird der Hohlkörper 13 bis zum durchmesserreduzierten Bereich der Öffnung 18 mit flüssigem oder pastösem Fixierstoff 12 gefüllt. Anschließend wird der Kolben 14 in die Öffnung 18 des Hohlkörpers 13 eingeführt, bis der Kolben 14 vom Fixierstoff 12 benetzt wird. In dieser Position liegt der Kolben 14 über seinen ganzen Umfang am Hohlkörper 13 an, d. h. die Vertiefungen 22 auf der Mantelfläche des Kolbens 14 münden nicht in den Innenraum 15 des Hohlkörpers 13.

Die zwischen dem Kolben 14 und dem Fixierstoff 12 eingeschlossene Luft entweicht durch die Durchgangsbohrung 20 in die Umgebung. Wenn die Luft vollständig entwichen ist, wird die Durchgangsbohrung 20 mit dem Verschluss 21 verschlossen. Dies kann beispielsweise durch Hitzeeinwirkung auf den Kolben 14 im Bereich der Mündung der Durchgangsbohrung 20 erfolgen. Durch die Hitze wird der Kunststoff des Kolbens 14 lokal geschmolzen und verschließt die Durchgangsbohrung 20 luft- und flüssigkeitsdicht. In diesem Zustand ist der Kolben 14 verliersicher am Hohlkörper 13 fixiert, da durch ein Herausbewegen des Kolbens 14 aus der Öffnung 18 ein Unterdruck und damit eine rückstellende Kraft entsteht. Der mit Fixierstoff 12 befüllte Fixierstoffbehälter 9 wird vom ersten axialen Ende 8 der Gewindehülse 3 her in die Gewindehülse 3 eingepresst bis er mit seinem Flansch 19 an das erste axiale Ende 8 der Gewindehülse 3 anschlägt. Beim Einpressen in die Gewindehülse 3 wird über den Flansch 19 und nicht über den Kolben 14 eine Kraft auf den Fixierstoffbehälter 9 ausgeübt. Der Fixierstoffbehälter 9 wird mit einem radialen Übermaß bzgl. der Gewindehülse 3 hergestellt, so dass er nach dem Einpressen fest in der Gewindehülse 3 sitzt und diese zum ersten axialen Ende 8 hin flüssigkeitsdicht verschließt. Ebenso ist es auch möglich, dass der Fixierstoffbehälter 9 ein nicht figürlich dargestelltes Außengewinde aufweist und in die Gewindehülse 3 eingeschraubt wird. In diesem Fall erstreckt sich das Innengewinde 7 der Gewindehülse 3 bis zum ersten axialen Ende 8.

Zur Herstellung der in Figur 2 dargestellten Anordnung kann folgendermaßen vorgegangen werden:

Der Lagerring 1 wird auf für sich bekannte Weise aus einem Stahlwerkstoff hergestellt, allerdings noch ohne die Bohrung 2. Dabei wird der Lagerring 1 insbesondere auch gehärtet. Bei sehr großen Lagerringen 1 werden in der Regel nur oberflächennahe Bereiche gehärtet. Prinzipiell ist aber auch eine vollständige Härtung möglich, die bevorzugt bei kleinen Lagerringen 1 zur Anwendung kommt.

Im gehärteten Lagerring 1 wird die Bohrung 2 mittels eines geeigneten Bohrwerkzeugs ausgebildet. Nach einem Reinigen der Bohrung 2 beispielsweise durch Ausblasen mit Druckluft oder Spülen mit einem Lösungsmittel wird die in Figur 3 dargestellte Gewindehülse 3 mit dem Fixierstoffbehälter 9 voran in die dafür vorgesehene Bohrung 2 im Lagerring 1 eingeführt. Die Führung der Gewindehülse 3 kann dabei durch die Bohrung 2 erfolgen. Es besteht aber auch die Möglichkeit einer Zwangsführung der Gewindehülse 3 durch ein Werkzeug, um eine besonders präzise Positionierung oder Zentrierung in der Bohrung 2 zu erreichen. Eine solche externe Zwangsführung kommt insbesondere dann in Betracht, wenn zwischen der Seitenwand 6 der Gewindehülse 3 und dem Wandbereich 4 der Bohrung 2 ein großer Freiraum vorgesehen ist und die Führung durch die Bohrung 2 somit zu unpräzise wäre.

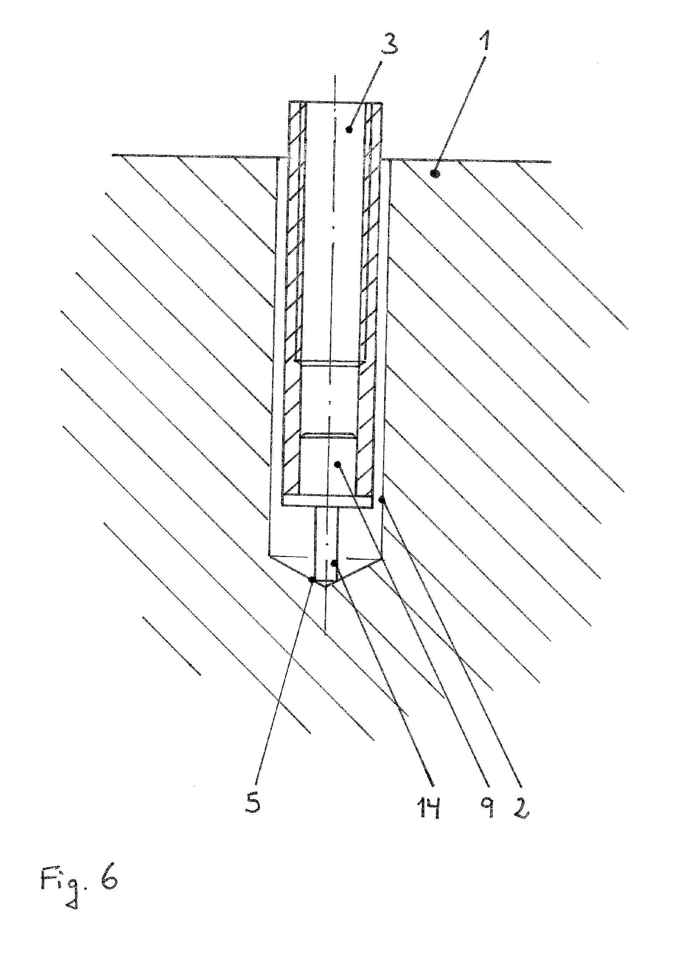

Bis der Kolben 14 des Fixierstoffbehälters 9 den Bodenbereich 5 der Bohrung 2 berührt, ist der Fixierstoff 12 zuverlässig im Innenraum 15 des Fixierstoffbehälters 9 eingeschlossen. Diese Situation ist in Figur 6 dargestellt.

Figur 6 zeigt eine Momentaufnahme während des Einführens der Gewindehülse 3 in die Bohrung 2 im Lagerring 1 in Schnittdarstellung. Zu dem dargestellten Zeitpunkt schlägt der Kolben 14 des Fixierstoffbehälters 9 gerade an den Bodenbereich 5 der Bohrung 2 im Lagerring 1 an.

Wird die Gewindehülse 3 nach dem Bodenkontakt weiter in die Bohrung 2 eingeführt, so wirkt der Kolben 14 mit zunehmendem Druck auf den Fixierstoff 12 im Innenraum 15 des Hohlkörpers 13 ein. Dies hat zur Folge, dass der Druck im Innenraum 15 des Hohlkörpers 13 ansteigt. Durch den Druck im Innenraum 15 des Hohlkörpers 13 wird der Boden 17 des Hohlkörpers 13 zunehmend nach außen verformt. Dies ermöglicht unter entsprechendem Kraftaufwand ein weiteres Vordringen des Kolbens 14 in den Innenraum 15 des Hohlkörpers 13, so dass die Vertiefungen 22 im Mantel des Kolbens 14 schließlich in den Innenraum 15 münden. Über die Vertiefungen 22 entweicht der unter Druck stehende Fixierstoff 12 aus dem Innenraum 15 des Hohlkörpers 13 in die Bohrung 2 im Lagerring 1 und der Kolben 14 wird immer tiefer in den Innenraum 15 gedrückt. Dadurch wird immer mehr Fixierstoff 12 durch die Vertiefungen 22 aus dem Innenraum 15 in die Bohrung 2 gedrückt. Der freigesetzte Fixierstoff 12 verteilt sich in der Bohrung 2 und füllt den Spalt 11 zunehmend aus. Dies wird solange fortgesetzt bis der Flansch 19 des Fixierstoffbehälters 9 an den Bodenbereich 5 der Bohrung 2 im Lagerring 1 anschlägt oder der Vorschub der Gewindehülse 3 in die Bohrung 2 im Lagerring 1 hinein auf sonstige Weise gestoppt wird. Durch die Ausnehmungen 23 im Flansch 19 wird ein etwaiger Überdruck verhindert. Die Bedingungen für diesen Anschlag bzw. das Stoppen des Vorschubs auf sonstige Weise werden in Abstimmung mit dem Volumen des Innenraums 15 und des Spalts 11 so eingerichtet, dass der Spalt 11 bis zu einer gewünschten Füllhöhe mit dem Fixierstoff 12 gefüllt wird. Dabei kann insbesondere auch vorgesehen sein, dass der Spalt 11 vollständig oder bis auf einen Sicherheitsabschlag vollständig mit dem Fixierstoff 12 gefüllt wird. Ebenso ist auch eine gezielte Überfüllung möglich, so dass überschüssiger Fixierstoff 12 aus der Bohrung 2 verdrängt wird. Auf diese Weise kann eine vollständige Füllung des Spalts 11 trotz Maßtoleranzen sichergestellt werden. Der überschüssige Fixierstoff 12 kann beispielsweise durch Abwischen entfernt werden. Ebenso ist es auch möglich, im Mündungsbereich der Bohrung 2 eine Senkung vorzusehen, welche den überschüssigen Fixierstoff 12 aufnimmt.

Der in die Bohrung 2 im Lagerring 1 austretende Fixierstoff 12 kommt mit dem Metall des Lagerrings 1 und dem Metall der Gewindehülse 3 in Kontakt und beginnt zu erhärten, so dass eine stoffschlüssige Verbindung zwischen der Gewindehülse 3 und dem Lagerring 11 ausgebildet und die Gewindehülse 3 dadurch dauerhaft am Lagerring 1 fixiert wird. Dieser Zustand ist in Figur 1 dargestellt. Alternativ kann bei Verwendung eines thermisch härtenden Fixierstoffs 12 und wärmefester Komponenten eine Heizschraube in das Innengewinde 7 der Gewindehülse 3 eingeschraubt werden und dadurch ein Erhärten des Fixierstoffs 12 ausgelöst werden. Nach dem Erhärten des Fixierstoffs 12 kann die Gewindehülse 3 belastet werden, d. h. es kann eine Schraube in die Gewindehülse 3 eingeschraubt werden, mit der beispielsweise eine Zusatzkomponente am Lagerring 1 befestigt wird.

Durch eine geeignete Oberflächentopographie der äußeren Mantelfläche der Gewindehülse 3 und/oder des Wandbereichs 4 der Bohrung 2 im Lagerring 1 kann die Haltbarkeit der Verbindung erhöht werden. Beispielsweise kann eine Mikrorauhigkeit vorgesehen sein, welche die Anhaftung des Fixierstoffs 12 an der Gewindehülse 3 und/oder am Lagerring 1 verbessert. Ebenso ist es möglich makroskopisch strukturierte Oberflächen mit einem Oberflächenprofil vorzusehen, in das der erhärtete Fixierstoff 12 formschlüssig eingreift.

Bei einer Abwandlung der Erfindung ist der Fixierstoffbehälter 9 nicht vollständig mit Fixierstoff 12 gefüllt, so dass zwischen dem Kolben 14 und dem Fixierstoff 12 ein Luftpolster ausgebildet ist. Da das Luftpolster leicht komprimiert werden kann, ist es bei dieser Abwandlung nicht erforderlich, dass der Boden 17 des Fixierstoffbehälters 9 zur Freisetzung des Fixierstoffs 12 verformt wird.

Abhängig vom verwendeten Fixierstoff 12 besteht die Möglichkeit, die Gewindehülse 3 mit vergleichsweise geringem Aufwand zu einem späteren Zeitpunkt wieder aus der Bohrung 2 zu entfernen. Dies kann beispielsweise dadurch geschehen, dass eine Schraube erhitzt und in das Innengewinde 7 der Gewindehülse 3 eingeschraubt wird. Je nach der genauen Zusammensetzung des Fixierstoffs 12 nimmt dessen Festigkeit ab einer Temperatur von ca. 200° C rapide ab, so dass die Klebehülse 3 aus der Bohrung 2 gezogen werden kann. Auf diese Weise kann beispielsweise eine beschädigte Gewindehülse 3 ersetzt werden.

### Bezugszeichen

- 1: Lagerring
- 2: Bohrung
- 3: Gewindehülse
- 4: Wandbereich
- 5: Bodenbereich
- 6: Seitenwand
- 7: Innengewinde
- 8: Erstes axiales Ende
- 9: Fixierstoffbehälter
- 10: Zweites axiales Ende
- 11: Spalt
- 12: Fixierstoff
- 13: Hohlkörper
- 14: Kolben
- 15: Innenraum
- 16: Seitenwand
- 17: Boden
- 18: Öffnung
- 19: Flansch
- 20: Durchgangsbohrung
- 21: Verschluss
- 22: Vertiefung
- 23: Ausnehmung

## Patentansprüche

1. Lagerring mit wenigstens einer Bohrung (2), wobei
- in der Bohrung (2) eine als ein separates Bauteil ausgebildete Gewindehülse (3) angeordnet ist
- die Gewindehülse (3) ein erstes axiales Ende (8) und ein zweites axiales Ende (10) aufweist,
- die Gewindehülse (3) im Bereich zwischen dem ersten axialen Ende (8) und dem zweiten axialen Ende (10) ein Innengewinde (7) aufweist,
- die Gewindehülse (3) im Bereich des ersten axialen Endes (8) einen Fixierstoffbehälter (9) mit einem Innenraum (15) zur temporären Bevorratung eines Fixierstoffs (12) aufweist und
- die Gewindehülse (3) mittels des Fixierstoffs (12) in der Bohrung (2) im Lagerring (1) fixiert ist.

2. Lagerring nach Anspruch 1, wobei der Fixierstoffbehälter (9) eine Freisetzvorrichtung aufweist, welche beim Einsetzen der Gewindehülse (3) in die Bohrung (2) im Lagerring (1) Fixierstoff (12) freisetzt.

3. Lagerring nach Anspruch 2, wobei die Freisetzvorrichtung als ein Kolben (14) ausgebildet ist, der in einer Öffnung (18) des Fixierstoffbehälters (9) angeordnet ist.

4. Lagerring nach Anspruch 3, wobei der Kolben (14) eine Durchgangsbohrung (20) aufweist, die in den Innenraum (15) des Fixierstoffbehälters (9) mündet.

5. Lagerring nach einem der Ansprüche 3 oder 4, wobei der Kolben (14) im Bereich seiner Mantelfläche wenigstens eine Vertiefung (22) aufweist, die zur Bohrung (2) im Lagerring (1) hin offen ist und über die bei Betätigung des Kolbens (14) Fixierstoff (12) aus dem Innenraum (15) des Fixierstoffbehälters (9) freisetzbar ist.

6. Lagerring nach einem der vorhergehenden Ansprüche, wobei der Fixierstoffbehälter (9) einen Flansch (19) aufweist, der axial an die Gewindehülse (3) anschlägt.

7. Lager, mit einem Lagerring (1), der gemäß einem der vorhergehenden Ansprüche ausgebildet ist.

8. Gewindehülse mit
- einem Innengewinde (7), das zwischen einem ersten axialen Ende (8) und einem zweiten axialen Ende (10) ausgebildet ist,
- einem Fixierstoffbehälter (9) mit einem Innenraum (15), der einen Fixierstoff (12) zum Fixieren der Gewindehülse (3) in einer Bohrung (2) enthält,
- einer Freisetzvorrichtung zum Freisetzen von Fixierstoff (12),
- wobei die Freisetzvorrichtung als ein Kolben (14) ausgebildet ist, der in einer Öffnung (18) des Fixierstoffbehälters (9) angeordnet ist und
- wobei der Kolben (14) eine Durchgangsbohrung (20) aufweist, die in den Innenraum (15) des Fixierstoffbehälters (9) mündet und/oder der Kolben (14) im Bereich seiner Mantelfläche wenigstens eine Vertiefung (22) aufweist, über die bei Betätigung des Kolbens (14) Fixierstoff (12) aus dem Innenraum (15) des Fixierstoffbehälters (9) freisetzbar ist.

9. Verfahren zum Fixieren einer Gewindehülse (3) in einer Bohrung (2) in einem Lagering (1), wobei ein Fixierstoffbehälter (9), der in seinem Innenraum (15) einen Fixierstoff (12) enthält und die Gewindehülse (3) in die Bohrung (2) eingeführt werden und beim oder nach dem Einführen der Gewindehülse (3) in die Bohrung (2) wenigstens ein Teil des Fixierstoffs (12) aus dem Innenraum (15) des Fixierstoffbehälters (9) freigesetzt wird.
